# EUROPÄISCHE PATENTANMELDUNG

(11) **EP 2 112 411 A2**
(43) Veröffentlichungstag der Anmeldung: **28.10.2009**
(21) Anmeldenummer: 08020960.4
(22) Anmeldetag: 03.12.2008
(51) Int. Cl.: F16K 7/10, F16L 55/124

(54) **Einrichtung zum Absperren einer unter erhöhtem Druck stehenden fluidführenden Rohrleitung**

(30) Priorität: 20.12.2007 DE 102007062505
(71) Anmelder: E.ON Ruhrgas AG, 45138 Essen (DE); Fraunhofer-Institut für Chemische Technologie ICT, 76237 Pfinztal (DE); Schuck Armaturen GmbH, 89555 Steinheim (DE)
(72) Erfinder: Neutz, Jochen, 76327 Pfinztal (DE); Schwengler, Peter, 47661 Issum (DE); Schuck, Michael, 89518 Heidenheim (DE)
(74) Vertreter: Harlacher, Mechthild

(57) **Zusammenfassung**

Die Erfindung betrifft eine Einrichtung zum Absperren einer unter erhöhtem Druck stehenden fluidführenden Rohrleitung, welche ein Rohranschlussstück (2) aufweist, mit einem Schleusenrohr (5), das mit dem Rohranschlussstück (2) verbunden ist, mit einem Führungsrohr (8), welches axial beweglich und gasdicht im Schleusenrohr (5) angeordnet ist, so dass sich im Schleusenrohr (5) ein druckdichter Raum (9) bildet, der mit einem Druckgas beaufschlagbar ist, wobei das Führungsrohr (8) einen aufblasbaren Absperrkörpcr (12) trägt, der an einer Füllleitung (13) angeschlossen ist, die mit Druckgas beaufschlagbar ist, mit einer Steuer- und Regeleinheit (11), die mindestens ein Auslöseelement (18) aufweist, mit dem eine Druckerhöhung im druckdichten Raum (9) des Schleusenrohres (5) mittels Druckgas auslösbar ist, wobei bei einer vorgegebene ersten Druckdifferenz der Absperrkörper (12) in die Rohrleitung eingebracht wird und wobei bei einer vorgegebenen zweiten Druckdifferenz die Befüllung des Absperrkörper(12) bewirkt wird, so dass der Absperrkörper (12) in der Rohrleitung eine formschlüssige Absperrung bildet.

## Beschreibung

Die Erfindung betrifft eine Einrichtung zum Absperren einer unter erhöhtem Druck stehenden fluidführenden Rohrleitung.

Derartige Absperreinrichtungen sind für die Schaltstellung "geschlossen" oder "vollständig offen" bestimmt und werden zum zeitweiligen Absperren von Rohrleitungen bei Störfällen dauerhaft in Rohrleitungen eingebaut. Die zu transportierenden Fluide können gasförmige, flüssige oder fließfähige feste Stoffe sein. Anwendungsmöglichkeiten bestehen insbesondere bei Erdgasleitungen in der Nenndruckstufe bis 25 bar. Ein weiteres wesentliches Anwendungsgebiet ist die chemische Industrie.

Bei Gasleitungen, die im Niederdruckbereich, d. h. bei Drücken unterhalb von 16 bar betrieben werden, ist bekannt, Rohrleitungen mit aufblasbaren Absperrkörpern zeitweilig abzusperren. Derartige Absperrkörper werden nicht dauerhaft in eine Rohrleitung eingebaut, sondern werden lediglich als Hilfsmittel bei geplanten Reparaturmaßnahmen genutzt, um den Gasfluss für eine bestimmte Zeitspanne zu unterbrechen, um den Reparaturbereich zusätzlich zu sichern.

In Rohrleitungsnetzen für die Erdgasversorgung im Hochdruckbereich sind in regelmäßigen Abständen, in der Regel im Abstand von einigen Kilometern, metallische Absperrarmaturen in die Rohrleitungen eingebaut, die schließen, wenn sie ein Schließsignal erhalten oder manuell geschlossen werden.

Die Absperrarmaturen, beispielsweise um Schieber, Absperrklappen oder Kugelhähne weisen ein Gehäuse auf, welches in die Rohrleitung eingebaut wird, so dass die Armatur im eingebauten Zustand vom Fluid durchströmt wird. Bei allen Absperrarmaturen befindet sich in einem Gehäuse ein metallischer Absperrkörper, der in die geschlossene Stellung gedreht oder geschoben wird. Derartige Armaturen sind relativ kostenaufwendig

Da in Rohrleitungsnetzen die Abstände zwischen den Absperrarmaturen relativ groß sind, dauert es im Falle eines Schadens lange, bis der entsprechende Abschnitt abgesperrt ist. Daher besteht die Gefahr, dass bei einer Leckage in der Rohrleitung ein Fluid, welches für Menschen oder die Umwelt schädlich oder gefährlich sein kann, beispielsweise ein brennbares Gas, über einen langen Zeitraum in die Atmosphäre und/oder in die Umgebung der Leitung gelangt.

Nachteilig ist ferner, dass bei einem Schadensfall zu Reparaturzwecken ein sehr langer Leitungsabschnitt entspannt werden muss. Das Fluid in der Rohrleitung, z. B. Erdgas, wird im Regelfall in die Atmosphäre entspannt, was aus Umweltschutzgründen unerwünscht ist.

Um die Abstände zwischen zwei Armaturen zu verringern, müssten in ein bestehendes Rohrleitungsnetz zusätzliche Absperrarmaturen eingebaut werden. Die Montage von herkömmlichen Absperrarmaturen ist aufwendig, weil für den Einbau die Rohrleitung vollständig durchtrennt werden muss, um das Armaturgehäuse einschweißen zu können. Der Montage - und Kostenaufwand ist folglich sehr groß.

Es stellt sich die Aufgabe, eine Absperrarmatur zum dauerhaften Einbau in eine Rohrleitung zu schaffen, die auf einfache Weise nachträglich, auch während des Leitungsbetriebes, in eine verlegte Rohrleitung eingebaut werden kann und die konstruktiv einfach aufgebaut ist.

Diese Aufgabe wird durch eine Einrichtung mit den Merkmalen des Anspruches 1 gelöst.

Die Einrichtung zum Absperren einer unter erhöhtem Druck stehenden fluidführenden Rohrleitung, welche eine Abzweigleitung bzw. ein T-Stück aufweist, weist ein Schleusenrohr auf, das mit der Abzweigleitung bzw. dem T-Stück verbunden ist. Ein Führungsrohr ist axial beweglich und gasdicht im Schleusenrohr angeordnet, so dass sich im Schleusenrohr ein druckdichter Raum bildet, der mit einem Druckgas beaufschlagbar ist. Das Führungsrohr trägt einen aufblasbaren Absperrkörper, der an einer Füllleitung angeschlossen ist, die mit Druckgas beaufschlagbar ist. Die Einrichtung weist ferner eine Steuer- und Regeleinheit auf, die mindestens ein Auslöseelement aufweist, mit dem eine Druckerhöhung im druckdichten Raum des Schleusenrohres mittels Druckgas auslösbar ist, wobei bei einer vorgegebene ersten Druckdifferenz der Absperrkörper in die Rohrleitung eingebracht wird und wobei bei einer vorgegebenen zweiten Druckdifferenz die Befüllung des Absperrkörper bewirkt wird, so dass der Absperrkörper in der Rohrleitung eine formschlüssige Absperrung bildet.

Diese Lösung hat den Vorteil, dass die Absperreinrichtung auf einfache Art und Weise nachträglich auch während des Leitungsbetriebes in eine verlegte Rohrleitung eingebaut werden kann. Außerdem ist die Absperreinrichtung konstruktiv einfach aufgebaut.

Durch die in den Unteransprüchen aufgeführten Maßnahmen sind vorteilhafte Weiterbildungen des in Anspruch 1 angegebenen Verfahrens möglich.

Vorzugsweise ist das Führungsrohr mit einem Dorn verbunden ist, der an seinem Ende eine Dornspitze aufweist, die in Achsrichtung der Rohrleitung verläuft und an der der Absperrkörper angeordnet ist und dass die Dornspitze ein Kompensatorelement enthält, um einen axialen Längenausgleich bei der Expansion des Absperrkörpers z. B. in Form einer Absperrblase zu ermöglichen.

Eine bevorzugte Ausführungsform ist dadurch gekennzeichnet, dass das Führungsrohr in dem Schleusenrohr mit einem lösbaren Haltelement befestigt ist, wobei das Halteelement bei eine vorgegebenen ersten Druckdifferenz zwischen der Rohrleitung und dem druckdichten Raum in dem Schleusenrohr auslöst wird.

Die Füllleitung endet vorzugsweise im druckdichten Raum des Schleusenrohres.

Vorteilhafterweise ist der Absperrkörper mit einer Textilverstärkung versehen und weist im aufgeblasenen Zustand eine zylindrisch ovale Form auf.

Der druckdichte Raum in dem Schleusenrohr kann mittels einer Druckgasleitung an einem Druckbehälter für ein Druckgas angeschlossen sein. Alternativ besteht die Möglichkeit, den druckdichten Raum in dem Schleusenrohr mittels einer Druckgasleitung an eine unter erhöhtem Druck stehende Rohrleitung anzuschließen.

Vorzugsweise befindet sich im Schleusenrohr ein Hybridgasgenerator zur Erzeugung von Druckgas.

Der erfindungsgemäße Hybridgasgenerator weist ein druckdichtes Gehäuse auf, in dem sich ein pyrotechnischer Antrieb befindet. Das Gehäuse ist mit einer Düsenöffnung versehen ist, die mit einer berstbaren Membrane verschlossen ist.

Vorzugsweise ist der pyrotechnische Antrieb vor der berstbaren Membran angeordnet.

Als Halteelement können beispielsweise Sollbruchelemente verwendet werden.

Als Druckgas kann vorzugsweise Luft, Argon Stickstoff oder Erdgas verwendet werden. Bei einer bevorzugten Ausführungsform ist das Auslöseelement als Drucksensor, als manuell betätigbarer Schalter oder zur Fernauslösung ausgebildet.

Vorzugsweise befindet sich zwischen dem Rohranschlussstück und dem Schleusenrohr eine Absperrarmatur.

Die Erfindung wird im Folgenden anhand eines bevorzugten Ausführungsbeispiels des erfindungsgemäßen Verfahrens im Zusammenhang mit der Zeichnung näher erläutert.

Die Zeichnung zeigt in:
Fig. 1 eine beispielsweise Darstellung einer Einrichtung zum Absperren in offener Stellung;
Fig. 2 die Einrichtung nach Fig. 1 in geschlossener Stellung;
Fig. 3 die wesentlichen Bauteile 3 der Einrichtung nach Fig. 1;
Fig. 4 eine beispielsweise Darstellung eines Hydridgenerators.

Zur nachträglichen Montage einer erfindungsgemäßen Absperreinrichtung 1 in eine nicht dargestellten erdverlegte Rohrleitung wird auf die Außenwand der Rohrleitung ein Rohranschlussstück in Form eines geteilten T-Stückes 2 oder in Form eines Anbohrstutzens aufgeschweißt. Auf bekannte Art und Weise wird in der Rohrleitung durch Anbohren eine Öffnung erzeugt.

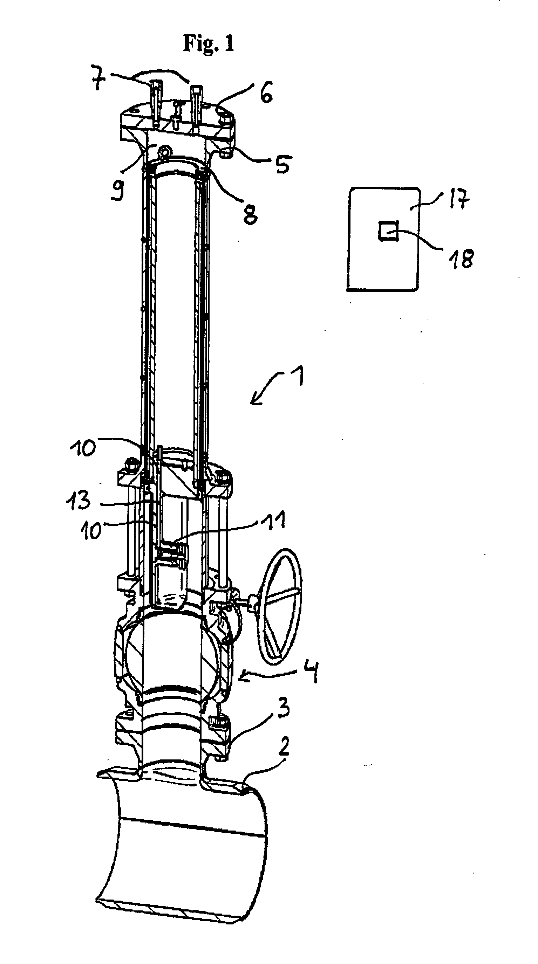

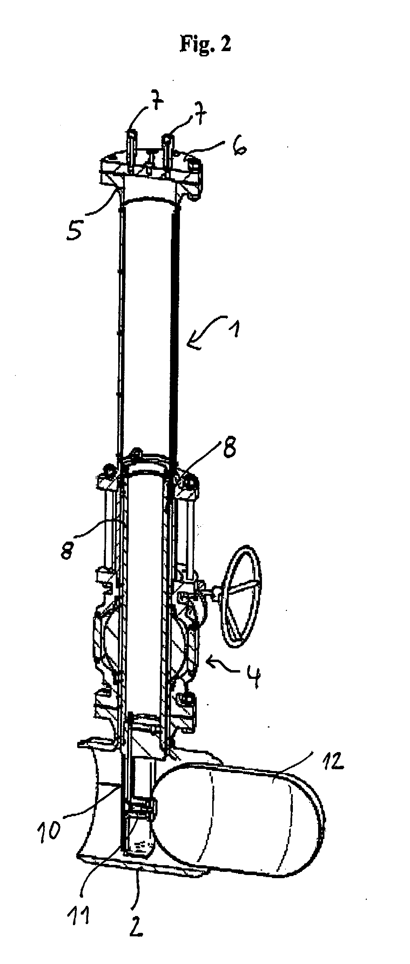

Wie in Fig. 1 und Fig. 2 dargestellt, weist das Rohranschlussstück bzw. das geteilte T-Stück an ihrem Ende einen Flansch 3 auf. An diesem Abgang wird eine handelsüblichen Absperrarmatur 4, z. B. ein Kugelhahn oder ein Absperrschieber angebracht. Diese Armatur 4 wird nur während des Anbohrvorganges und zur Montage der Absperreinrichtung als Schleuse benötigt.

Auf der Absperrarmatur wird ein Schleusenrohr 5 befestigt. Das der Absperrarmatur entgegen gesetzte offene Ende des Schleusenrohres wird durch einen Blindflansches 6 mit Anschlüssen 7 zur Druckgenerierung verschlossen.

In dem Schleusenrohr befindet sich ein axial bewegliches Führungsrohr 8, welches gasdicht im Schleusenrohr 5 angeordnet ist, so dass sich im Schleusenrohr 5 ein druckdichter Raum 9 bildet.

Der druckdichte Raum des Schleusenrohres 9 dient als Druckspeicher, um die erforderlichen Druckverhältnisse für die Auslösung, die axiale Bewegung des Absperrkörpers und die Befüllung des Absperrkörpers zu gewährleisten.

Das Führungsrohr ist in dem Schleusenrohr mit einem nicht dargestellten lösbaren Halteelement befestigt, wobei das Halteelement bei einer vorgegebenen ersten Druckdifferenz, insbesondere bei einem variablen Differenzdruck von bis zu 8 bar, zwischen der Rohrleitung und dem druckdichten Raum 9 in dem Schleusenrohr auslöst wird.

In Fig. 1 bis Fig. ist 3 ist dargestellt, dass das Führungsrohr an seinem Ende einen Dorn 10 aufweist, der als Bolzen ausgebildet ist. Am Ende des Dorns ist an einer Dornspitze 11 ein aufblasbarer Absperrkörper 12 befestigt und soweit zusammengefaltet, dass eine Durchführung der Dornspitze durch die Abspenarmatur 4 und durch den Anbohrstutzen in Form eines geteilten T-Stückes 2 bzw. in die angebohrte Rohrleitung möglich ist. Der Absperrkörper 12 darf bei diesem Vorgang nicht beschädigt werden und muss lagerichtig positioniert sein.

Die Dornspitze 11 beinhaltet diverse nicht dargestellte Bauteile, die einen axialen Längenausgleich bei der Expansion des Absperrkörpers in der Rohrleitung ermöglicht. Dadurch wird eine Relativbewegung zwischen Absperrblase und Rohrwandung und eine damit einhergehende Verletzung der Oberfläche des Absperrkörpers vermieden.

Der Absperrkörper 12 besteht im dargestellten Fall aus einer dickwandigen, aufblasbaren ovalen Blase mit Textilverstärkung. Die Textilverstärkung ist mit der Blase fest verbunden. Der Absperrkörper weist eine Füllleitung 13 auf, die in dem druckdichten Raum 9 im Schleusenrohr 5 endet.

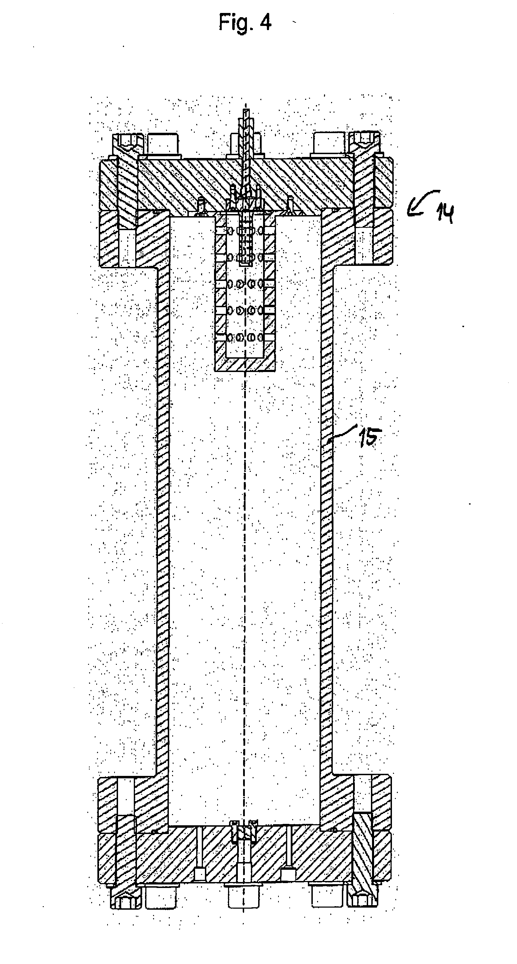

In dem Schleusenrohr 5 ist ein Hybridgasgenerator 14 integriert, der in Fig. 4 dargestellt ist. Der Hybridgasgenerator 14 weist ein druckdichtes Gehäuse 15 und einen pyrotechnischem Antrieb 16 auf. Die Befüllung des Absperrkörpers mit dem Hybridgasgenerator erfolgt mit denen aus der Airbagtechnologie bekannten Bauform der Gasgeneratoren. Hybridgasgenerator bezeichnet dabei ein Gasgeneratorsystem, bei der eine Kombination von Druckgas und Pyrotechnik verwendet wird. Beim Hybridsystem lagern die vorgespannten Druckgase (Luft, Stickstoff, Argon) in einem Hochdruckbehälter, der mit einer Berstmembrane versehen ist. Der pyrotechnische Treibsatz ist bei diesem System entweder im Hochdruckbereich des Generators oder direkt vor der Berstmembrane untergebracht. Die Pyrotechnik dient primär zum Öffnen der Berstmembrane, damit das Gas ausströmen kann. Die Abkühlung des expandierenden Arbeitsgases wird durch die Mischung mit den heißen Reaktionsgasen der Pyrotechnik mit dem ausströmenden Gas aus- oder sogar überkompensiert. Da die Gesamtmenge des pyrotechnischen Satzes mengenmäßig gering ist, sind die vorgeschriebenen Grenzwerte der im Arbeitsgas enthaltenen toxischen Gase relativ leicht einzuhalten. Dieses ist, neben der idealen Temperatur des Arbeitsgases, der Hauptvorteil der Hybridgasgeneratoren.

Im Falle einer Auslösung wird der Absperrkörper bei einer ersten vorgegebenen Druckdifferenz durch die geöffnete Absperrarmatur in die zu sperrende Rohrleitung geführt.

Die Befüllung des Absperrkörpers 12 wird bei einer vorgegebenen zweiten Druckdifferenz bewirkt, so dass der Absperrkörper 12 in der Rohrleitung eine formschlüssige Absperrung bildet. Der Absperrkörper wird gefüllt, wenn dieser sich mittig in der Rohrleitung befindet. Der Absperrkörper 12 bleibt aufgepumpt bis Erstmaßnahmen und ggf. Reparaturmaßnahmen eingeleitet worden sind.

Die Verwendung von Hybridgasgeneratoren ermöglicht durch die Verwendung einer entsprechenden Düsengeometrie die Realisierung einer langen Ausströmzeit des Druckgases und damit einer angepassten Entfaltungs- und Befüllcharakteristik des Absperrkörpers 5. Dies ist für den geplanten Anwendungsbereich von besonderem Interesse, um Druckschwankungen auf dem Leitungsnetz zu verhindern. Der Hybridgasgenerator 14 ist durch verschiedene Düseneinsätze in der Lage, Operationszeiten von bis zu 60 s zu realisieren.

Eine in Fig. 1 schematisch dargestellte Steuer- und Regeleinheit 17, die mindestens ein Auslöseelement 18 aufweist, kontrolliert den Druckausgleich, steuert die Auslösung des Absperrsystems, regelt den Druck und steuert die ggf. erforderliche Entspannung der gesamten Absperreinrichtung.

Die Steuer- und Regeleinheit 17 beinhaltet einen Steuerschrank, die die Komponenten für die Regelung des Druckausgleichs, die Auslösung des Absperrsystems, die Druckregelung und ggf. erforderliche Entlüftung des gesamten Notabspenrgerätes und ebenfalls die Schnittstelle für die Auslöseeinheit enthält.

Die Steuer- und Regeleinheit 17 sowie das Auslöseelement 18 und die Absperreinrichtung sind über nicht dargestellte starre und flexible Leitungen miteinander verbunden.

Für die Auslösung der Absperreinrichtung sind verschiedene Möglichkeiten, wie z.B. manuelle Schalter, Drucksensoren, und/oder Fernauslösung, vorgesehen.

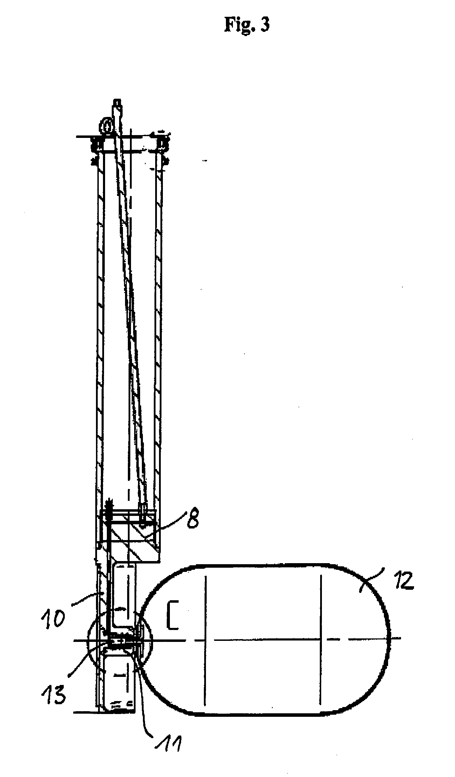

Zum Entspannen der Absperreinrichtung wird per Knopfdruck oder mittels Fernwirktechnik ein Entspannungsventil ausgelöst. Der Dorn wird mittels einer in Fig. 3 dargestellten Stange manuell hochgezogen und die Absperrarmatur geschlossen.

Am Ende der Reparaturmaßnahme wird ein neuer Absperrkörper 12 eingesetzt und die Einrichtung mit neuem Druckgas bzw. Treibmittel bestückt.

Im Rahmen der Erfindung sind ohne Weiteres Abwandlungsmöglichkeiten gegeben. So kann das Schleusenrohr von einem Druckgas aus einem Druckbehälter für ein Druckgas mittels einer Druckgasleitung beaufschlagt werden. Der Druckbehälter hat eine Austrittsdüse, deren Öffnungsquerschnitt die Geschwindigkeit bestimmt, mit der der Absperrkörper aufgeblasen bzw. befüllt werden kann. Der Druckspeicher befindet sich als separate Einheit außerhalb der eigentlichen Absperreinrichtung. Das Mindestvolumen welches von der Baugröße des Absperrsystems abhängig ist, wird mit einem bestimmten Druck vorgespannt. Als Druckspeicher kann alternativ eine unter erhöhtem Druck stehende Rohrleitung genutzt werden. Das Rohranschlussstück bzw. das geteilte T-Stück kann an seinem Ende ein Anschweißende aufweisen. Der Absperrkörper kann aus mehreren einzelnen Absperrkörpern gebildet werden.

## Patentansprüche

1. Einrichtung zum Absperren einer unter erhöhtem Druck stehenden fluidführenden Rohrleitung, welche ein Rohranschlussstück (2) aufweist,
mit einem Schleusenrohr (5), das mit dem Rohranschlussstück (2) verbunden ist,
mit einem Führungsrohr (8), welches axial beweglich und gasdicht im Schleusenrohr (5) angeordnet ist, so dass sich im Schleusenrohr (5) ein druckdichter Raum (9) bildet, der mit einem Druckgas beaufschlagbar ist,
wobei das Führungsrohr (8) einen aufblasbaren Absperrkörper (12) trägt, der an einer Füllleitung (13) angeschlossen ist, die mit Druckgas beaufschlagbar ist,
mit einer Steuer- und Regeleinheit (11), die mindestens ein Auslöseelement (18) aufweist, mit dem eine Druckerhöhung im druckdichte Raum (9) des Schleusenrohres (5) mittels Druckgas auslösbar ist, wobei bei einer vorgegebene ersten Druckdifferenz der Absperrkörper (12) in die Rohrleitung eingebracht wird und
wobei bei einer vorgegebenen zweiten Druckdifferenz die Befüllung des Absperrkörper(12) bewirkt wird, so dass der Absperrkörper (12) in der Rohrleitung eine formschlüssige Absperrung bildet.

2. Einrichtung nach Anspruch 1,
**dadurch gekennzeichnet,**
**dass** mit dem Führungsrohr (8) ein Dorn (10) verbunden ist, der an seinem Ende eine Dornspitze (11) aufweist, die in Achsrichtung der Rohrleitung verläuft und an der der Absperrkörper (12) angeordnet ist und dass die Dornspitze (11) ein Kompensatorelement enthält, um einen axialen Längenausgleich bei der Expansion des Absperrkörper zu ermöglichen.

3. Einrichtung nach Anspruch 1 oder 2,
**dadurch gekennzeichnet, dass** das Führungsrohr (8) in dem Schleusenrohr (5) mit einem lösbaren Haltelement befestigt ist, wobei das Halteelement bei eine vorgegebenen ersten Druckdifferenz zwischen der Rohrleitung und dem druckdichten Raum (5) in dem Schleusenrohr(5) auslöst wird.

4. Einrichtung nach Anspruch 1 oder 2,
**dadurch gekennzeichnet, dass** die Füllleitung (13) im druckdichten Raum (9) des Schleusenrohres (5) endet.

5. Einrichtung nach einem der Ansprüche 1 bis 4,
**dadurch gekennzeichnet, dass** der Absperrkörper (12) mit einer Textilverstärkung versehen ist und im aufgeblasenen Zustand eine zylindrisch ovale Form aufweist.

6. Einrichtung nach einem der Ansprüche 1 bis 5,
**dadurch gekennzeichnet,**
**dass** der druckdichte Raum (9) in dem Schleusenrohr (5) mittels einer Druckgasleitung an einem Druckbehälter für ein Druckgas angeschlossen ist.

7. Einrichtung nach einem der Ansprüche 1 bis 5,
**dadurch gekennzeichnet,**
**dass** der druckdichte Raum (9) in dem Schleusenrohr (5) mittels einer Druckgasleitung an eine unter erhöhtem Druck stehende Rohrleitung angeschlossen ist.

8. Einrichtung nach einem der Ansprüche 1 bis 5,
**dadurch gekennzeichnet,**
**dass** sich im Schleusenrohr ein Hybridgasgenerator (14) zur Erzeugung von Druckgas befindet.

9. Einrichtung nach Anspruch 8,
**dadurch gekennzeichnet,**
**dass** der Hybridgasgenerator ein druckdichtes Gehäuse (15) aufweist, in dem sich ein pyrotechnischer Antrieb (16) befindet und dass das Gehäuse (15) mit einer Düsenöffnung versehen ist, die mit einer berstbaren Membrane verschlossen ist.

10. Einrichtung nach Anspruch 9,
**dadurch gekennzeichnet,**
**dass** der pyrotechnischer Antrieb vor der berstbaren Membran angeordnet ist.

11. Einrichtung nach einem der Ansprüche 1 bis 10,
**dadurch gekennzeichnet, dass**
als Druckgas Luft, Argon Stickstoff oder Erdgas verwendet wird.

12. Einrichtung nach einem der Ansprüche 1 bis 11,
**dadurch gekennzeichnet, dass**
dass das Auslöseelement (18) als Drucksensor oder als als manuell betätigbarer Schalter ausgebildet ist.

13. Einrichtung nach einem der Ansprüche 1 bis 11,
**dadurch gekennzeichnet, dass**
dass das Auslöseelement (18) zur Fernauslösung ausgebildet ist.

14. Einrichtung nach einem der Ansprüche 1 bis 14,
**dadurch gekennzeichnet, dass**
dass sich zwischen dem Rohranschlussstück (2) und dem Schleusenrohr (5) eine Absperrarmatur (4) befindet.
